(19) Europäisches Patentamt
European Patent Office
Office européen des brevets

(11) Numéro de publication: **0 178 982**
**B1**

(12) **FASCICULE DE BREVET EUROPEEN**

(45) Date de publication du fascicule du brevet: **20.12.89**

(51) Int. Cl.⁴: **C 08 F 4/64**, C 08 F 10/06

(21) Numéro de dépôt: **85401890.0**

(22) Date de dépôt: **26.09.85**

(54) **Procédé de polymérisation comprenant un catalyseur à stabilité en activité améliorée dans le temps pour la polymérisation du propylène.**

(30) Priorité: **16.10.84 FR 8415843**

(43) Date de publication de la demande:
**23.04.86 Bulletin 86/17**

(45) Mention de la délivrance du brevet:
**20.12.89 Bulletin 89/51**

(84) Etats contractants désignés:
**BE CH FR IT LI LU NL SE**

(56) Documents cités:
**FR-A- 2 436 152**
**FR-A- 2 539 133**

(73) Titulaire: **ATOCHEM, 4 & 8, Cours Michelet La Défense 10, F-92800 Puteaux (FR)**

(72) Inventeur: **Duranel, Laurent, 3, Rue du Hameau de Trespoey, F-64000 Pau (FR)**
Inventeur: **Spitz, Roger, 44, Rue des Fleurs, F-69360 Serezin Du Rhone (FR)**

(74) Mandataire: **Foiret, Claude et al, ATOCHEM Département Propriété Industrielle, F-92091 Paris la Défense 10 Cédex 42 (FR)**



Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de polymérisation du propylène comprenant un catalyseur à stabilité en activité améliorée dans le temps. Il est connu que, de façon générale, les catalyseurs à base de trialkyle aluminium associés aux halogénures des métaux de transition supportés et plus particulièrement aux chlorures de titane tri et tétravalent sont peu stables en activité dans le temps dans la polymérisation du propylène. Il a été constaté, contrairement à toute attente, que l'isoprényle aluminium (IPRA), associé aux chlorures de titane et plus particulièrement au $TiCl_4$ supporté permet de réaliser un catalyseur de polymérisation du propylène possédant une excellente stabilité, en activité dans le temps. Des brevets français 2 332 288, 2 363 583 et américain 4 220 745 il est connu d'associer à la base catalytique de polymérisation des oléfines, constituée d'un halogénure de titane supporté sur un halogénure de magnésium et d'un donneur d'électrons, un composé organométallique d'aluminium.

Si la stabilité en activité dans le temps de ces systèmes catalytiques est reconnue dans le cas de la polymérisation en suspension de l'éthylène, elle décroît très rapidement dans le cas de la polymérisation du propylène. Comme déjà indiqué, il a été constaté que parmi ces nombreux composés organométalliques d'aluminium utilisables et utilisés seul l'IPRA permet d'obtenir un système catalytique dont l'activité s'accroît en début de polymérisation pour se stabiliser durant une longue période de polymérisation pouvant, selon les conditions, s'étendre sur plusieurs heures.

Le catalyseur utilisé dans le procédé selon l'invention consiste en un système comprenant un composant constitué de chlorure de magnésium et de chlorure de titane tétravalent associé à l'IPRA. Il est également particulièrement recommandé d'introduire un donneur d'électrons, consistant en une base de Lewis, dans le système catalytique à un moment quelconque de sa fabrication.

L'IPRA est un produit connu en lui-même, il est habituellement préparé par chauffage de triisobutyle aluminium, ou éventuellement d'hydrure d'aluminium diisobutylique, en présence d'isoprène. De l'isobutylène se dégage et des restes d'hydrocarbure provenant de l'isoprène se lient à l'aluminium.

Le composant constitué de $MgCl_2$ et de $TiCl_4$ est préparé habituellement par imprégnation de $TiCl_4$ du $MgCl_2$ amené à une taille moyenne des particules convenable, ou mieux, bien que ces procédés ne soient pas limitatifs, par cobroyage du $MgCl_2$ avec $TiCl_4$ en présence ou non de donneur d'électrons à une température inférieure à environ 130 °C.

Dans le système catalytique le rapport du nombre d'atomes d'aluminium au nombre d'atomes de titane se situe habituellement entre 0,5 et 1000 et mieux entre 1 et 400. Le système catalytique peut être préformé par mise en contact du solide catalytique composé au moins de $MgCl_2$-$TiCl_4$ avec l'IPRA avant d'être amené en contact avec la propylène. On peut également ajouter le solide catalytique et l'IPRA séparément dans la zone de polymérisation du propylène.

La base de Lewis, composé organique comportant un ou plusieurs hétéro-atomes tels que O,N,S, éventuellement introduite dans le système catalytique peut par exemple être choisie parmi les acides carboxyliques aliphatiques ou aromatiques et leurs esters alcoyliques, les ethers aliphatiques ou aromatiques, les cétones, les esters vinyliques, les dérivés acryliques, en particulier acrylates ou méthacrylates d'alcoyle et les silanes. Conviennent notamment les composés tels que paratoluate de méthyle, benzoate d'éthyle, acétate d'éthyle ou de butyle, éther éthylique, anisate d'éthyle, tétrahydrofuranne, dioxane, acétone, méthylisobutylcétone, acétate de vinyle, méthacrylate de méthyle et phényltriéthoxysilane.

Il n'est pas exclu d'associer à l'IPRA dans le système catalytique au moins un autre composé organométallique d'aluminium. Cette adjonction, tout en améliorant entre autres la tacticité des polymères obtenus à partir des systèmes selon l'invention, ne nuit absolument pas à la stabilité de l'activité et cela malgré le manque de cette stabilité des systèmes catalytiques mis en œuvre à partir de ces autres composés organométalliques de l'aluminium. Ce ou ces autres composés organométalliques d'aluminium peuvent être introduits à tout moment dans le système catalytique. Il peut par exemple être associé directement à l'IPRA. Il peut même être introduit dans le cadre d'une prépolymérisation du propylène en tant que cocatalyseur du solide catalytique, l'IPRA étant ajouté ultérieurement seul ou associé à un autre composé organométallique d'aluminium. Bien entendu il est toujours possible et même recommandé d'associer au moins un donneur d'électrons à tout ce nouvel ensemble catalytique.

Cet autre composé organométallique d'aluminium peut être choisi parmi les composés organoaluminium de formule $Al(R')_qMrHs$ dans laquelle M représente Cl ou Or', R' désigne un radical alcoyle en $C_1$ à $C_{16}$, et de préférence en $C_1$ à $C_{12}$, tandis que q, r et s sont des nombres tels que $1 \leqslant q \leqslant 3$, $O \leqslant r \leqslant 2$ et $O \leqslant s \leqslant 2$ avec $q + r + s = 3$. De préférence il est choisi parmi les composés organoaluminium de formule $AlR''_xCl(3\text{-}x)$, dans laquelle R'' désigne un radical alcoyle en $C_1$ à $C_8$ et x est un nombre tel que $1 \leqslant x \leqslant 3$. Des exemples de ces composés sont tels que triéthylaluminium, tri isopropylaluminium, tri isobutylaluminium, tri n-hexylaluminium, tri n-octylaluminium, chlorure de diéthylaluminium.

Il peut également être choisi parmi les composés aluminoxanes de formule

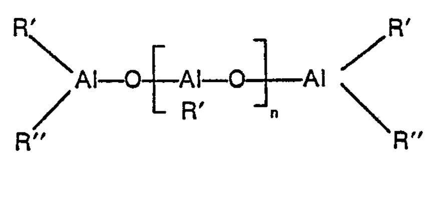

dans laquelle R′ est un radical alcoyle en $C_1$ à $C_{16}$ ou un halogène, les R″ forment ensemble un radical –O– ou désignent chacun un radical R′ et «n» est un nombre entier prenant les valeurs de 0 à 20.

Les courbes de la Figure 1 illustrent l'effet inattendu de l'IPRA. Ces courbes schématisent les cinétiques comparatives de l'activité dans le temps des principaux composés organométalliques d'aluminium associés au $MgCl_2$ et $TiCl_4$ dans une polymérisation de propylène dans 500 ml d'heptane sous une pression de 0,4 MPa à 60 °C, la concentration en alkyle aluminium dans le milieu, calculé en aluminium étant de 10 millimoles par litre. Alors que, comparé au triéthylaluminium (TEA) (courbe 1), triisobutylaluminium (TIBAL) (courbe 2), trioctylaluminium (TOA) (courbe 3), et chlorure de diéthylaluminium (DEAC), cocatalyseurs classiques entraînant une chute rapide dans le temps de l'activité du système catalytique, on s'attend à obtenir une courbe similaire (4) avec l'IPRA, on obtient au contraire, la courbe (6) démontrant la stabilité dans le temps de l'activité catalytique du système.

Les conditions de polymérisation en suspension dans un milieu inerte liquide ou dans le propylène liquide ou encore suivant un procédé de polymérisation du propylène en solution dans un milieu inerte liquide avec le système catalytique selon l'invention, notamment températures, pressions, quantité de système catalytique sont celles qui sont habituellement proposées pour des cas similaires faisant appel à des systèmes catalytiques conventionnels de type Ziegler Natta supporté. On peut par exemple opérer à des températures allant jusqu'à 250 °C et sous des pressions allant de la pression atmosphérique à 25 MPa éventuellement en présence d'hydrogéne.

On peut préalablement à la polymérisation, effectuer une prépolymérisation à une température inférieure à celle de polymérisation, en général inférieure à 60 °C sous une pression comprise entre la pression atmosphérique et 10 MPa, jusqu'à un taux de conversion compris entre 1 et 100 en mettant en contact le solide catalytique avec un composé organométallique d'aluminium, une oléfine et éventuellement une base de Lewis, l'IPRA étant ajouté seul ou additionné à un autre composé organométallique d'aluminium dans le prépolymérisat.

Les exemples suivants illustrent l'invention sans la limiter.

Les tacticités données dans les exemples sont exprimées en pourcentage d'insoluble (IH%) dans l'heptane à reflux.

EXEMPLE 1 (Exemple comparatif)

Cet exemple montre, de façon comparative, la stabilité de l'activité dans le temps d'un système catalytique avec comme cocatalyseur d'une part l'IPRA et d'autre part la triéthylaluminium (TEA).

Préparation du solide catalytique $MgCl_2$-$TiCl_4$-ester aromatique.

1–10,5 g (110,5 millimoles) de $MgCl_2$ anhydre sont séchés thermiquement sous vide à 300 °C pendant 2 heures.

2–$MgCl_2$ est ensuite broyé pendant 2 heures dans un bol de broyage de 80 ml en acier contenant 50 g de billes d'acier de différents diamètres, (4, 6, 8, 12 mm). Le bol est animé d'un mouvement alternatif vertical transmis par un moteur à l'aide d'un système bielle-excentrique. La fréquence est de 8 Hertzs pour une vitesse de 500 tours/minute.

3. Au $MgCl_2$ précédemment broyé, on additionne du paratoluate de méthyle de façon à ce que le rapport molaire $MgCl_2$/ester aromatique soit égal à 16. Le cobroyage est repris pendant 6 heures toujours sous atmosphère inerte.

4. Le support $MgCl_2$ ester aromatique est mis en suspension dans l'heptane. On additionne 10 ml de $TiCl_4$ et maintient la suspension à 60 °C pendant 2 heures. La concentration en $TiCl_4$ est de 6 moles par litre.

5. Après réaction, la solution surnageante est prélevée et le solide séché sous vide à température ambiante. Le solide catalytique obtenu contient 2,3% en poids de titane.

Préparation de la solution catalytique

Sous atmosphère inerte on introduit successivement dans un ballon:

- 500 ml d'heptane
- IPRA et dans un autre essai TEA à titre d'essai comparatif. Les quantités introduites représentant 5 millimoles calculées en aluminium.
- environ 50 mg du solide catalytique précédent.

Polymérisation

La solution catalytique ainsi préparée est immédiatement transvasée, toujours sous atmosphère inerte, dans un réacteur d'un litre et mise sous pression de 0,4 MPa de propylène. On maintient, sous bonne agitation, la température à 60 °C. La pression totale est maintenue à 4 bars absolus pendant 90 minutes. Après détente, la réaction est ensuite stoppée par introduction de 10 ml de méthanol acide.

La figure 2 illustre l'influence de l'IPRA et de la TEA sur la cinétique de polymérisation.

EXEMPLE 2 (Exemple comparatif)

Les conditions de préparation du solide catalytique utilisé dans cet exemple diffèrent de celles décrites à l'exemple 1 tant sur les durées respectives des étapes du broyage: 4 heures pour l'étape 2 et 12 heures pour l'étape 3, que sur la nature de l'ester aromatique mis en œuvre pendant l'étape de cobroyage. On utilise ici le benzoate d'éthyle de façon à ce que le rapport molaire $MgCl_2$/ester aromatique soit égal à 11. Après imprégnation par $TiCl_4$ et séchage, la teneur en titane du solide catalytique est de 50 mg par gramme de catalyseur.

L'exemple 1 est repris en associant à ce nouveau système catalytique un donneur d'électrons : l'anisate d'éthyle.

L'anisate d'éthyle est introduit à raison de 250 µl (1,25 mole) à la solution catalytique décrite ci-dessus à l'exemple 1 et avant l'introduction du solide catalytique.

La figure 3 illustre l'influence de l'IPRA et du TEA (à titre comparatif) en présence d'anisate d'éthyle sur la cinétique de polymérisation.

EXEMPLE 3

Pour cet exemple, le solide catalytique utilisé est celui décrit à l'exemple 1.

Dans un premier temps on reprend les conditions de polymérisation de l'exemple 2 en utilisant comme ester aromatique (= donneur d'électrons) associé au composé organoaluminique, en l'occurence l'IPRA, soit le benzoate d'éthyle, soit l'anisate d'éthyle. La quantité d'ester introduit est calculée de façon à ce que le rapport molaire aluminium/ester aromatique soit égal à 4.

Après polymérisation, on obtient respectivement les produits A et C.

Dans un deuxième temps, on effectue une prépolymérisation en introduisant dans un réacteur sous atmosphère inerte:
- 20 ml d'heptane
- TEA de façon à avoir une concentration en aluminium de 20 millimoles par litre
- Anisate d'éthyle de façon à avoir le rapport molaire aluminium/anisate d'éthyle de 3 (Essai D) ou benzoate d'éthyle de façon à avoir le rapport molaire aluminium/benzoate d'éthyle de 3 (Essai B)
- Hexene-1 de façon à avoir le rapport molaire Hexene/Titane de 50
- Solide catalytique environ 50 mg

La prépolymérisation s'effectue à 25 °C pendant 60 minutes sous pression atmosphérique de propylène.

On reprend les prépolymérisats et on effectue deux polymérisations toujours dans les conditions de l'exemple 2 en présence encore une fois soit de benzoate d'éthyle (essai B) soit d'anisate d'éthyle (essai D). Le rapport molaire aluminium sur ester est alors de 4.

Les résultats obtenus sont donnés dans le tableau suivant:

| | Productivité (g Polypropylène/g de titane) | IH |
|---|---|---|
| (Exemple comparatif) Essai A | 19.000 | 80,7 |
| (invention) Essai B | 31.700 | 82,2 |
| (Exemple comparatif) Essai C | 8.700 | 91,1 |
| (invention) Essai D | 17.000 | 89,2 |

## Revendications

1. Procédé de polymérisation du propylène sous une pression inférieure à 25 MPa et à une température inférieure à 250 °C en présence d'un système catalytique constitué au moins d'un halogénure de titane et d'un halogénure de magnésium comme solide catalytique et d'un composé organométallique de l'aluminium caractérisé en ce que préalablement à la polymérisation du propylène en effectue, avant d'ajouter l'isoprényle aluminium au milieu réactionnel, une prépolymérisation à une température inférieure à 60 °C sous pression comprise entre la pression atmosphérique et 10 MPa jusqu'à un taux de conversion de 1 à 100 en mettant en contact le solide catalytique avec un composé organométallique d'aluminium, une oléfine et éventuellement une base de Lewis.

2. Procédé selon la revendication 1 caractérisé en ce que l'IPRA est ajouté au milieu réactionnel additionné d'un composé organométallique de l'aluminium.

3. Procédé selon l'une des revendications 1 ou 2 caractérisé en ce que le composé organométallique de l'aluminium est choisi parmi les composés de formule $Al(R')_q M_r H_s$ dans laquelle M représente Cl.

## Claims

1. A process for the polymerization of propylene at a pressure below 25 MPa and a temperature below 250 °C in the presence of a catalytic system comprising at least one titanium halide and one magnesium halide as catalytic solid and an organometallic aluminium compound, characterized in that prior to the polymerization of propylene, and before addition of isoprenyl aluminium to the reaction medium, a prepolymerization is performed at a temperature below 60 °C and at a pressure between atmospheric pressure and 10 MPa, until a conversion rate of 1 to 100 is reached, by contacting the catalytic solid with an organometallic aluminium compound, an olefin and optionally a Lewis base.

2. A process according to claim 1, characterized in that the IPRA is added to the reaction medium in the presence of an additional organometallic aluminium compound.

3. A process according to one of claims 1 or 2, characterized in that the organometallic aluminium compound is selected from compounds having the formula $Al(R')_q M_r H_s$ wherein M represents Cl.

## Patentansprüche

1. Verfahren zur Polymerisierung von Propylen bei einem Druck unterhalb von 25 MPa und bei einer Temperatur unterhalb von 250 °C in Gegenwart eines katalytischen Systems bestehend aus wenigstens einem Titanhalogenid und einem Magnesiumhalogenid als katalytischer Festkörper und einer organometallischen Verbindung des Aluminiums, dadurch gekennzeichnet, daß man

vor der Polymerisierung des Propylens und vor dem Zugeben des Aluminiumisoprenyls zum Reaktionsmilieu eine Prepolymerisation bei einer Temperatur unterhalb von 60°C und bei einem Druck zwischen Atmosphärendruck und 10 MPa durchführt bis zu einem Umwandlungsgrad von 1 bis 100, durch in Kontakt bringen des katalytischen Festkörpers mit einer organometallischen Verbindung des Aluminiums, einem Olefin und gegebenenfalls einer Lewis-Base.

2. Verfahren nach Anspruch 1, dadurch gekennzeichnet, daß das Isoprenylaluminium dem Reaktionsmilieu zusammen mit einer organometallischen Verbindung des Aluminiums zugegeben wird.

3. Verfahren nach einem der Ansprüche 1 oder 2, dadurch gekennzeichnet, daß die organometallische Verbindung des Aluminiums ausgewählt wird aus den Verbindungen der Formel $Al(R')_qM_rH_s$ in denen M Cl darstellt.

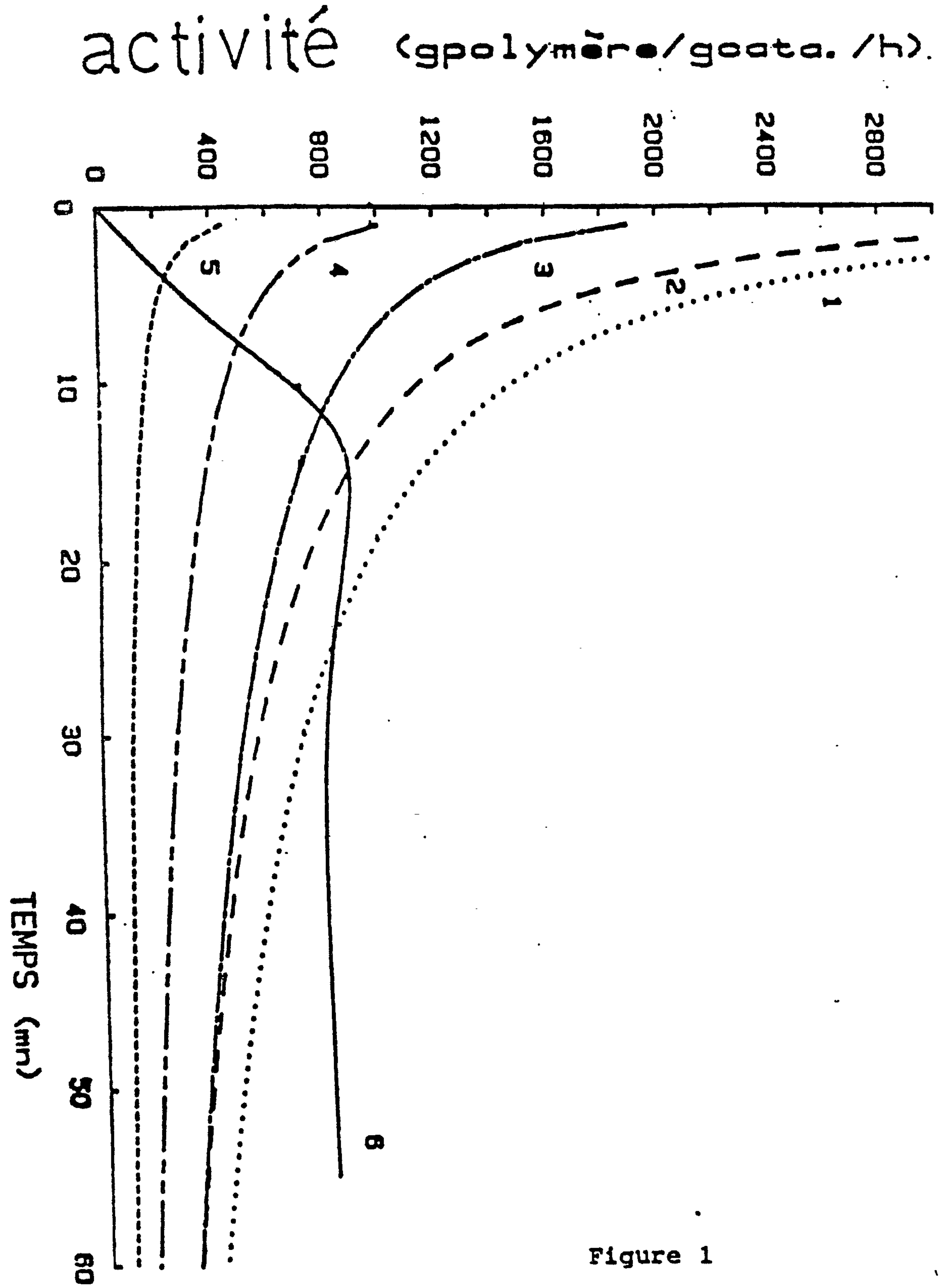
activité (gpolymère/gcata./h).
0
400
800
1200
1600
2000
2400
2800
0
10
20
30
40
50
60
TEMPS (mn)
1
2
3
4
5
8

Figure 1

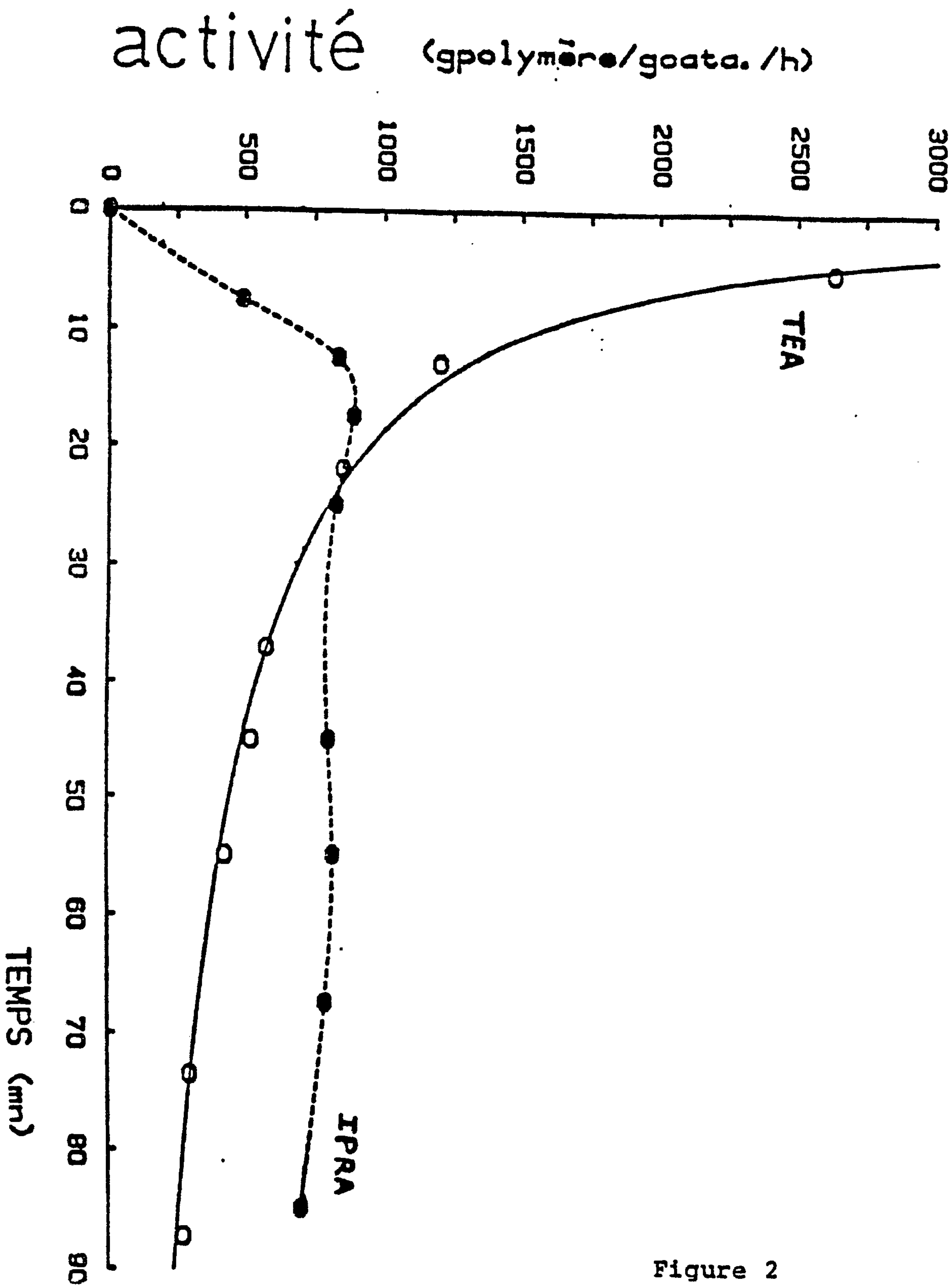
activité (gpolymère/goata./h)
0
500
1000
1500
2000
2500
3000
TEA
IPRA
0
10
20
30
40
50
60
70
80
90
TEMPS (mn)

Figure 2

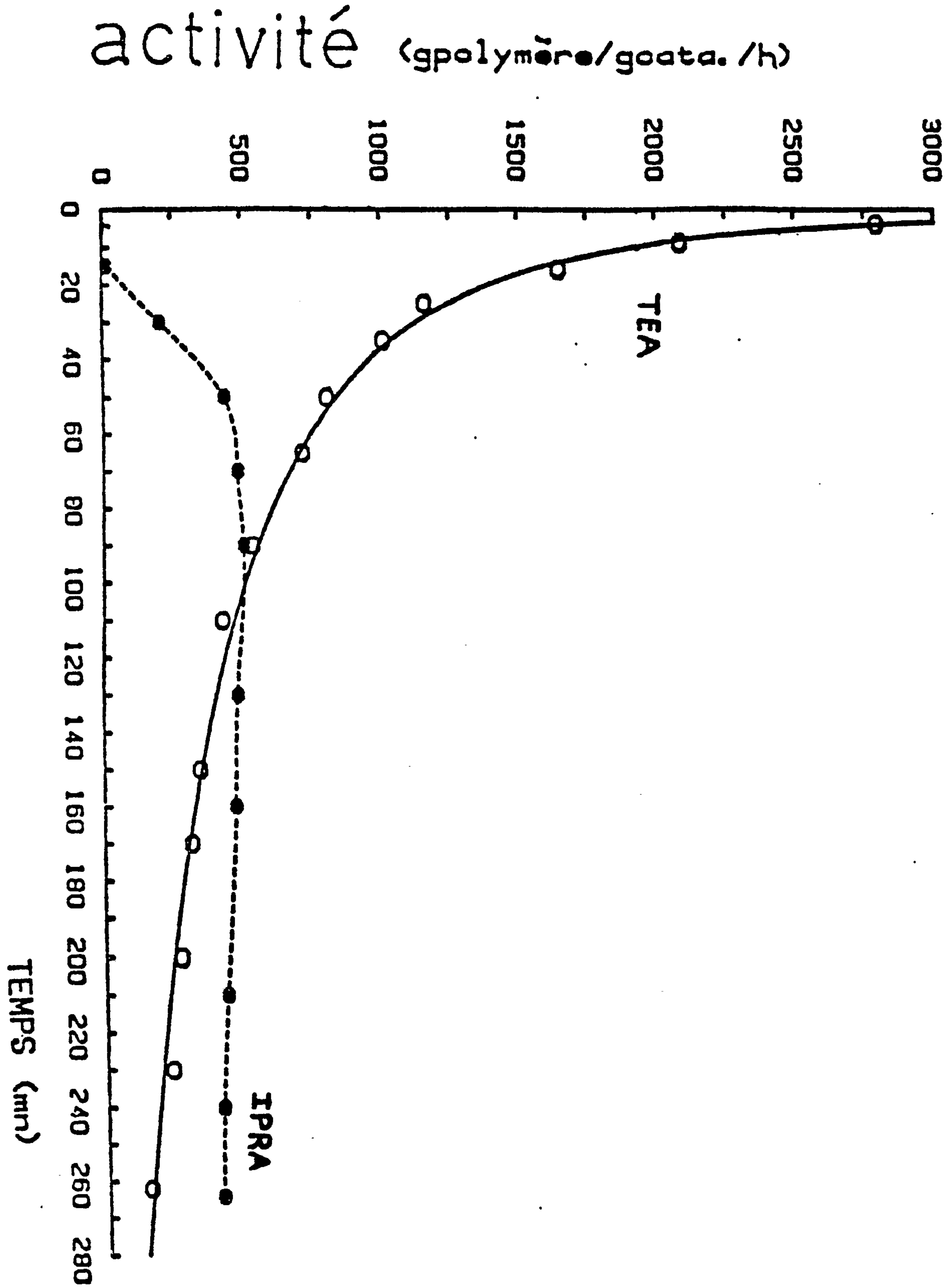
activité (gpolymère/gcata./h)
0
500
1000
1500
2000
2500
3000
0
20
40
60
80
100
120
140
160
180
200
220
240
260
280
TEMPS (mn)
TEA
IPRA